# EUROPEAN PATENT SPECIFICATION

(11) **EP 3 195 671 B1**
(45) Date of publication and mention of the grant of the patent: **06.03.2019**
(21) Application number: 15757262.9
(22) Date of filing: 01.09.2015
(51) Int. Cl.: H04W 68/00

(54) **METHOD FOR AN ENHANCED AND AN ADAPTIVE MOBILITY MANAGEMENT WITHIN A MOBILE COMMUNICATION NETWORK, MOBILE COMMUNICATION NETWORK, SYSTEM, PROGRAM AND COMPUTER PROGRAM PRODUCT**
VERFAHREN ZUR VERBESSERTEN UND ADAPTIVEN MOBILITÄTSVERWALTUNG INNERHALB EINES MOBILKOMMUNIKATIONSNETZWERKS, MOBILKOMMUNIKATIONSNETZWERK, SYSTEM, PROGRAMM UND COMPUTERPROGRAMMPRODUKT
PROCÉDÉ POUR UNE GESTION DE LA MOBILITÉ ADAPTATIVE ET AMÉLIORÉE DANS UN RÉSEAU DE COMMUNICATION MOBILE, RÉSEAU DE COMMUNICATION MOBILE, SYSTÈME, PROGRAMME INFORMATIQUE ET PRODUIT LOGICIEL

(30) Priority: 19.09.2014 EP 14185621
(43) Date of publication of application: 26.07.2017
(73) Proprietor: Deutsche Telekom AG, 53113 Bonn (DE)
(72) Inventor: NENNER, Karl-Heinz, 53332 Bornheim (DE)
(74) Representative: Schwöbel, Thilo K.
(86) International application number: PCT/EP2015/069969
(87) International publication number: WO 2016/041771

(56) References cited:
- EP-A1- 2 020 819
- EP-A1- 2 320 694
- WO-A1-00/28769
- TTC/ARIB: "Draft UE-UTRAN L3 RRC Signaling Protocol Vol 9 Ver. 1.0.0", 3GPP DRAFT; RRC_100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Helsinki, Finland; 19990218, 18 February 1999 (1999-02-18), XP050112258,
- HUNG TUAN DO ET AL: "Merit of Adaptability to Mobile User Parameters in IP Paging", WIRELESS ON-DEMAND NETWORK SYSTEMS AND SERVICES, 2005. WONS 2005. SECO ND ANNUAL CONFERENCE ON ST. MORITZ, SWITZERLAND 19-21 JAN. 2005, PISCATAWAY, NJ, USA,IEEE, 19 January 2005 (2005-01-19), pages 246-251, XP010769994, DOI: 10.1109/WONS.2005.22 ISBN: 978-0-7695-2290-6

## Description

### BACKGROUND

The present invention relates to a method for an enhanced and an adaptive mobility management within a mobile communication network, wherein at least a first user equipment and a second user equipment are attached to the mobile communication network within a common serving cell.

Furthermore, the present invention relates to a mobile communication network for an enhanced and an adaptive mobility management within a mobile communication network, wherein at least a first user equipment and a second user equipment are attached to the mobile communication network within a common serving cell.

Additionally, the present invention relates to a user equipment or telecommunication device adapted to be used in connection with such a mobile communication network, and to a system for an enhanced and an adaptive mobility management, the system comprising a mobile communication network and a plurality of user equipments.

Furthermore, the present invention relates to a program and to a computer program product for an enhanced and an adaptive mobility management within a mobile communication network.

In mobile networks (or mobile communication networks, being typically cellular networks, involving a plurality of radio cells), mobile terminals (also known as user equipments) need to be attached to the network as a precondition for using the network's services. Once attached, it is necessary to keep track of the location of the user equipments (or terminals) in a way to assure that the user equipments (or terminals) are reachable for terminating services (e.g. incoming voice call, data traffic, SMS, etc.). When the user equipment is actively communicating with the network (e.g. due to an ongoing call or a data session, or a signaling transaction), its location is known by the network on a per-cell granularity (i.e. the serving cell of the user equipment is known by virtue of a cell identifier (CID)), and every change of the serving cell is notified by the user equipment and/or tracked and/or commanded by the network. The user equipment usually stays in this connected mode for a while after the communication has ended. In that mode, it is not necessary for the network to search for the user equipment when an incoming service arrives, given that the user equipment can be reached via its known serving cell and the communication context of the user equipment is maintained.

At some stage while there has been no active communication between the user equipment and the network for a while, the network and/or the user equipment may decide to leave the connected mode while retaining the attachment of the user equipment to the network. In the context of mobility management, that mode of operation is often termed the "idle mode" of the user equipment. Typically, the reason for user equipments to enter idle mode is to enable them to enter a less power-intensive mode of operation, and for the network to free resources that would otherwise be needed to maintain the communication context of the user equipment.

It is common in today's mobile networks that the radio access network (RAN) part of the network "forgets" the user equipment context at some point after the user equipment enters idle mode, whereas a sufficient subset of the communication context of the user equipment is retained in the core network (CN) part of the network that allows the reestablishment of an active communication (i.e. entering the connected mode) upon request.

For maximum battery life of the user equipment, the user equipment tries to be in idle mode - within the limits of policies set out by the network - for as much or as long as possible. One way of achieving this is to avoid that user equipments, being in idle mode, signal serving cell changes to the network. Thus, in idle mode, the serving cell of the user equipment is not known to the network as the user equipment - within certain geographical limits - picks the most suitable serving cell autonomously while moving within a plurality of radio cells of the mobile communication network, without notifying the network about the serving cell change. This implies that, upon arrival of a terminating service, the network needs to search for the user equipment in order to determine the current serving cell of the user equipment. A procedure called paging is employed for this purpose. In order for paging to work reliably, it must be guaranteed that the network maintains a well-known set of cells with assurance that the serving cell of user equipment is part of that set of cells.

In 3GPP-defined networks (GSM/UMTS/LTE, Global System for Mobile Communications / Universal Mobile Telecommunications System / Long Term Evolution), that set of cells is called a Location Area or Routing Area or Tracking Area. The network will consequently page the user equipment in all radio cells of such an area, and the communication is established via the radio cell from which the user equipment responds to the paging. In many of today's mobile networks, establishing the communication upon paging includes the provision of the communication context of the user equipment (UE communication context) to the entities involved in the communication, and the establishment/reservation of suitable radio resources on the air interface. It is also common in today's mobile networks that user equipments notify the network of their current area in cycles / intervals that are configured in the network, even when no area change has occurred. This is called periodic location area/routing area/tracking area update (LA/RA/TA update) and is usually controlled by associated timers that expire in the absence of other communication between the user equipment and the network.

In GSM and UMTS, sets of adjacent radio cells are grouped into Location Areas (LA) in the circuit switched part of the network, and sets of adjacent cells are grouped into Routing Areas (RA) in the packet switched part of the GSM/UMTS network, with the additional condition that a Routing Area be completely included in a Location Area. In LTE, sets of adjacent cells are grouped into Tracking Areas (TA). A radio cell can only belong to one LA and one RA in GSM/UMTS, or to one TA in LTE, and each radio cell broadcasts "its" area ID(s) in addition to its cell identifier (CID). User equipments register their applicable IDs based on these broadcast parameters.

From the perspective of the network, a user equipment can have only one serving cell, identified by the CID. In GSM and UMTS, a user equipment can have only one LA and one RA assigned to it. In LTE, the network may assign TAs to the user equipment in addition to the TA of the serving cell; this is then called the TA list. Due to the hierarchical structure of the network, LAs, RAs and TA lists must be designed such that all cells within those areas belong to the service domain of the responsible mobility management unit ("MMU", i.e., MSC (Mobile Switching Center) for LA, SGSN (Serving GPRS (General Packet Radio Service) Support Node) for RA and MME (Mobility Management Entity) for TA lists). Given that RAs must be completely contained within an LA (i.e. the cell set of an RA is a subset of the cell set of the containing LA), the above requirement implies that SGSN service domain boundaries must match the service domain boundary of the MSC that "hosts" the LAs encircling the SGSN's RAs. Moreover, in certain configurations (e.g. CS Fallback) it is beneficial but not strictly necessary to even align coverage areas of LAs with coverage areas of TAs.

User equipments do not signal serving cell changes to the network in idle mode if the identity of the current LA/RA does not change, respectively the new serving cell's TA is part of the TA list of the user equipment (i.e. in case the user equipment moves between radio cells that belong to the same LA or RA or TA). There are methods by which the network may attempt to minimize the likelihood/frequency of those cell changes that imply leaving the current LA/RA/TA list, such as radio signal thresholds.

When the user equipment signals a change of LA/RA/TA to the network, it typically includes the old LA/RA/TA ID in the message. This allows the receiving MMU to know whether it either already served the user equipment before (i.e., the old LA/RA/TA was in its own service domain) - and thus already has the context of the user equipment - or if not to identify the previous MMU node by mapping the old area ID to the ID of the MMU in whose service domain that area lies. This may be used e.g. to derive the context of the user equipment (including encryption and authorization information) from the previous MMU rather than downloading the complete profile from HLR/HSS (Home Location Register / Home Subscriber Server) and the network's AAA/security systems.

For incoming packet switched services, the GSM/UMTS network pages in all radio cells of the RA of the user equipment. For circuit switched services, it pages in all radio cells of the LA of the user equipment. In LTE, the network pages in all cells of all TAs of the TA list assigned to the user equipment. Communication is then established in the serving cell of the user equipment, i.e. in the radio cell from which the network receives the answer to the paging, which is then registered by the network as the new serving cell of the user equipment.

In this solution, the user equipment only knows the serving cell ID and the ID(s) of the LA/RA/TA(s) assigned to it. It does not know which radio cells are included in the respective area. Each radio cell has knowledge of its own CID and area ID and may be configured to know CID and area ID of adjacent or neighboring cells (e.g. for handover or for assisting the roving UE in serving cell acquisition and selection). The MMUs must know each of the areas within their service domain and, for each area, the cell set contained in them. Of course, it is necessary that the cell ID and LA/RA/TA ID broadcast by a radio cell and the various mappings of cell identities (CID) to LA/RA/TA maintained in the network need to be consistent.

For these reasons, a cumbersome and error prone process exists in current mobile communication networks in order to plan the different LA/RA/TA areas, radio cells and their membership of areas, and furthermore to configure and maintain those tables in a consistent manner across many network entities (MMUs, radio cells, ....) - including radio cell adjacency. Additionally, as a consequence of the cumbersome planning and administration process, the LA/RA/TA areas and their radio cell sets are comparatively static, i.e. they cannot be changed (or are at least typically not changed) instantly or on demand.

EP 2 020 819 A1 discloses a wireless system wherein paging of mobile stations in idle mode is supported, wherein cells of base stations belong to paging groups controlled by paging controllers which send paging messages to idle mode mobile stations in their respective paging groups.

### SUMMARY

An object of the present invention is to provide a technically simple, effective and especially cost effective solution for an enhanced and an adaptive mobility management within a mobile communication network such that it is possible to reduce network planning efforts while at the same time increase the flexibility and efficiency in operating the mobile communication network. The present invention relates to a method for an enhanced and adaptive mobility management as well as to a corresponding mobile communication network system, program and computer program product according to the features of respective claims 1, 11, 12, 13 and 14.

The object of the present invention is achieved by a method for an enhanced and an adaptive mobility management within a mobile communication network, wherein at least a first user equipment and a second user equipment are attached to the mobile communication network,
wherein the mobile communication network comprises at least a core network and an access network, wherein the access network comprises a plurality of radio cells, one radio cell among the plurality of radio cells being the serving cell of both the first user equipment and the second user equipment, wherein - while the first user equipment and the second user equipment are, during an initial time interval, in an idle mode, respectively - the method comprises at least the steps performed by the mobile communication network of:
-- in a first step - upon a first mobile terminated service targeting the first user equipment - a first paging operation is performed targeting the first user equipment,
   and
-- in a second step, either during the first step or subsequent to the first step, - upon a second mobile terminated service targeting the second user equipment - a second paging operation is performed targeting the second user equipment,
wherein the first paging operation is performed - during the initial time interval - in a first paging area, and the second paging operation is performed - during the initial time interval - in a second paging area, the first paging area being defined as corresponding to either the serving cell or a first set of radio cells specific of the first user equipment, and the second paging area being defined as corresponding to either the serving cell or to a second set of radio cells specific of the second user equipment, wherein the mobile communication network defines the paging areas assigned to the first and second user equipments such that a mandatory overlap between the first paging area and the second paging area is restricted to the serving cell, wherein the first paging area and the second paging area differ from each other dependent on current mobility needs and a speed of the first user equipment and the second user equipment.

It is thereby advantageously possible according to the present invention that network planning efforts can be dramatically reduced. This is due to the fact that it is plurality of radio cells; however the "set of radio cells" can also merely comprise one single radio cell. In this case (of the set of radio cells comprising only one radio cell), this radio cell typically corresponds to the currently serving cell of the user equipment. However and alternatively to assigning one or a plurality of radio cells to only one user equipment, it is also possible according to the present invention to assign a certain set of radio cells (i.e. one or a plurality of radio cells) to a group of user equipments (i.e. the assignment is - according to this alternative solution of the present invention - not individual to one user equipment but individual (or specific) to a group or a set of user equipments) such that the assigned set of radio cells is adapted to the specific mobility needs and/or mobility pattern of that group of user equipments. It is especially advantageous that such an assignment does not interfere with predefined and more or less static LA/RA/TA areas such that this assignment is able to change relatively quickly, e.g., depending on the time of the day, etc.

According to the present invention, the way that mobility management works is changed in that a single-level mobility concept is applied: rather than having areas that consist of a set of cells and assign such area(s) to a user equipment, each user equipment (or group of user equipments) is (or are) directly assigned a cell set (comprising one radio cell, i.e. the serving cell, or a plurality of radio cells including the serving cell). In the context of the present invention, the area of such a set of cells is also referred to by the term "paging area" of that user equipment (or group of user equipments). Whereas according to the mobility concept realize in conventional mobile communication networks, the user equipment knows an area ID and the serving cell ID but not the radio cells that belong to that area, it is advantageously possible according to the present invention that by design the paging area is equal to the cell set, and the user equipment does know all the radio cells that comprise the paging area assigned to that user equipment. User equipments notify the network when they move to a cell that is not in the paging area, i.e. when they more to a cell that is not in the cell set currently assigned to them. When paging is needed, the network uses the cell set that is currently assigned to the user equipment as the paging area. This approach enables a number of enhancements over conventional mobile communication networks:
-- user equipment-individual paging area assignment is possible, i.e. rather than having a fixed allocation of cell sets (defined by the (more or less static) definition of location areas and/or routing areas and/or tracking areas) to the user equipment by virtue of LA/RA/TA list comprised of a fixed set of cells, the cell set assigned to a user equipment according to the present invention can be individually and user equipment-specific.
-- dynamic paging area assignment is possible, i.e. rather than having static areas assigned to the user equipment, it is advantageously possible to assign a set of cells dynamically (which is not possible, e.g., in GSM and UMTS mobile communication networks, as the radio cells that belong to LA/RA areas cannot be instantly and dynamically changed (as one would have to re-plan and reconfigure the complete system), and in LTE, only the list of (static) tracking areas can be individualized and changed arbitrarily, not their granularity). In contrast, according to the present invention, the mobile communication network can arbitrarily and dynamically change the cell set assignment, and hence the paging area, for every user equipment individually at every time.

Furthermore, the following advantages of the present invention over conventional mobile communication networks apply:
-- The problem of the conflicting goals of maximizing the paging area for idle mode efficiency, and of minimizing the paging area for paging efficiency can be solved;
-- The cumbersome and error prone process to plan the areas, cells and their membership of areas as well as the configuration and maintenance those tables in a consistent manner across many network entities (MMUs, cells, ....) is removed;
-- In conventional mobile communication network, it is not specified how the user equipments would deal with inconsistencies within the network planning data;
-- Due of the cumbersome planning and administration process in conventional mobile communication networks, the (LA/RA/TA) areas and their cell sets are comparatively static, i.e. they cannot (practically) be changed instantly or on demand;
-- Areas, i.e. LA/RA/TA areas, cannot be user equipment-individual (or user equipment-specific); all user equipments having the same area(s) assigned and are treated in the same way, irrespective of their actual individual mobility pattern;
-- The approach used in conventional mobile communication networks cannot take different mobility and speed of individual user equipments into account;
-- If it is required to know whether a user equipment is within a (set of) cell(s), then a Location Area / Routeing Area / Tracking Area that contains this cell / these cells needs be individually planned - which does not scale for a large number of user equipments, e.g. when an operator wants to introduce a "home cell" (single-cell home service) or home area (multiple-cell home service) service;
-- Two levels of mobility management - area IDs and the radio cells that they comprise - need to be planned such that the operator's strategy in that plan is visible to outsiders by monitoring the cell broadcasts

In the context of the present invention, it is referred to a first user equipment and a second user equipment being attached to the mobile communication network using the same radio cell, i.e. the serving radio cell of the first and second user equipment. It is assumed that both the first user equipment and the second user equipment are assigned an individual set of cells, respectively, resulting in a first set of cells assigned to the first user equipment and a second set of cells assigned to the second user equipment. The first set of cells (including either only the serving cell and no other radio cell or comprising the serving cell and additionally at least one other radio cell, typically a neighboring radio cell, i.e. neighboring with respect to the serving cell) defines a first paging area and the second set of cells (including likewise either only the serving cell and no other radio cell or comprising the serving cell and additionally at least one other radio cell, typically a neighboring radio cell) defines a second paging area. It is assumed according to the present invention, that the two user equipments are not in connected mode (as being in connected mode would typically not result in conducting a paging operation in order to determine the serving radio cell of the user equipments) but both in idle mode. That is why upon a mobile terminated service targeting the first user equipment (also called "first mobile terminated service"), a first paging operation is performed targeting the first user equipment, and likewise upon a mobile terminated service targeting the second user equipment (also called "second mobile terminated service"), a second paging operation is performed targeting the second user equipment. According to the present invention, the first paging operation is performed in the first paging area (i.e. corresponding to the set of radio cells assigned to the first user equipment), and the second paging operation is performed in the second paging area (i.e. corresponding to the set of radio cells assigned to the second user equipment). According to the present invention, due to the individual assignment of the sets of radio cells to the different user equipments, the mandatory overlap between the first paging area of the first user equipment and the second paging area of the second user equipment is restricted to the serving cell, i.e. there might be pairs of user equipments (attached to the mobile communication network within the serving cell) that have more radio cells (than only the serving cell) assigned in common but according to the present invention, the minimum common assignment corresponds only to one radio cell, i.e. to the serving cell. This is in contrast to, e.g., the situation in an LTE mobile communication network where the minimum common assignment corresponds to the (statically defined) radio cells of the tracking area that comprises the serving cell of the user equipments. In other words: According to the present invention, the first paging area (assigned to the first user equipment) and the second paging area (assigned to the second user equipment) are different with the exception of the serving cell, at least for certain specific mobility pattern of the first and second user equipments.

According to the present invention, it is especially advantageous that by means of the dynamic and individual assignment of paging areas (by means of the assignment of cell sets to user equipments), it is possible for the mobile communication network to adapt the cell set per user equipment in a way to achieve both goals (less paging efforts by reducing paging areas vs. less battery drain of the user equipments due to a reduced number of LA/RA/TA updating procedures by increasing the paging area) conflicting in conventional mobile communication networks: by having the mobile communication network monitor where, and how often, a user equipment signals a change of the assigned paging area, the paging area can be adapted (for that user equipment) to contain a modified set of cells so that both the cell set is as small as possible (for paging optimization) and the user equipment can remain in idle mode as long as possible (for battery life optimization). Self-learning algorithms in the network can automatically adapt the user equipment specifically assigned cell sets to the mobility pattern of the user equipment, or any change of that pattern (which manifests itself by the user equipment leaving its previously used (and hence learned from the past mobility pattern) paging area more often, thus causing area change signaling more often compared to what usually did occur for that user equipment).

According to a preferred embodiment of the present invention, the inventive method therefore includes that - in case that the first paging area corresponds to the first set of radio cells and/or the second paging area corresponds to the second set of radio cells - the first paging area and the second paging area differ from each other depending on
-- the current mobility needs and the speed of the first user equipment and the second user equipment
   and/or
-- the mobility pattern - derived from a preceding time interval - of the first user equipment and of the second user equipment.

Thereby, the first and second paging areas are individually modified according to the mobility pattern and the current mobility needs and the speed of the user equipments.

With the above capability, the cell set (or paging area) assigned to a user equipment can be determined (by the mobile communication network) in order to match the mobility needs and the speed of the user equipment, and be dynamically adapted to changes thereof. E.g., a user equipment used by an office worker may have a single radio cell assigned to his/her device, whereas a user equipment in a car driving on a motorway can have a radio cell set assigned such that the next adjacent radio cells lie along the motorway path. In this example of the office worker, it is advantageously possible according to the present invention that the cell set (or paging area) that covers the way from home to work gets assigned when the user equipment is turned on in the morning, and later on when the user equipment is in the radio cell that covers the work place, the cell set is reduced to just that radio cell. This can be achieved by the mobile communication network knowing that the user equipment has entered that cell (e.g. because it entered the connected mode in that cell or that cell is not part of the predefined cell set), or by a stepwise shrinking of the cell set. It is advantageously possible according to the present invention to take into account the date, the day of the week and/or the time of day in this procedure, e.g. for the worker he/she will go to work Monday to Friday but typically not during the weekends, and the time he/she usually arrives at work can be determined from a few days of observation. Assuming that the office worker's drive to / from work will include a motorway section, then the cell set assignment can cover exactly that stretch of motorway. Other user equipments travelling between different motorway entrances and exits can have different cell sets assigned.

Stepwise shrinking of an assigned cell set is a suitable measure to iteratively determine the optimal cell set for a user equipment, i.e. the smallest set without area changes. This function can take date and time into account, e.g. as in the office worker example above.

According to a preferred embodiment of the present invention, the inventive method therefore includes the step that - during a further time interval subsequent to the initial time interval and in case that a reduced mobility of the first user equipment is detected during a predetermined time interval - a subsequent paging operation, applied upon a subsequent first mobile terminated service targeting the first user equipment, is performed - instead of in the first paging area - in a modified first paging area, the modified first paging area comprising less radio cells of the plurality of radio cells than compared to the first paging area used during the initial time interval, wherein especially an information related to or regarding the modified first paging area is communicated to the first user equipment during a time interval that the first user equipment is in connected mode, especially in connected mode for other reasons than transmitting the information regarding the modified first paging area.

The cell set assignment to the different user equipments may be changed upon execution of the periodic LA/RA/TA updating, leveraging the fact that the user equipment must enter the connected mode in order to perform the update signaling. Not only is it advantageously possible to change the cell set assignment to the different user equipments flexibly, but also to optimize signaling by doing this in the course of a periodic update or upon other occasions that the user equipment is in connected mode.

According to the present invention, it is furthermore preferred that information related to or regarding the first paging area or the modified first paging area
-- is stored in a paging area repository, the paging area repository being accessible to the core network and/or the access network of the mobile communication network, and
-- is either communicated, by the mobile communication network, to the first user equipment or is accessible - especially via the paging area repository - to the first user equipment,
wherein especially an information related to or regarding the first paging area or the modified first paging area is exchanged, especially directly, between the first user equipment and the paging area repository.

Thereby, it is advantageously possible that the individual paging areas of the user equipments can be accessed easily. Of course, this also extends to the second user equipment and to all other user equipments within the mobile communication network, i.e. - for the second user equipment - the modification - when performing a paging operation - from using the second paging area to using a modified second paging area is stored in the paging area repository (together with the modified first paging area of the first user equipment and the paging areas of the other user equipments), the paging area repository being accessible to the core network and/or the access network of the mobile communication network, and is either communicated, by the mobile communication network, to the second user equipment or is accessible - especially via the paging area repository - to the second user equipment.

According to the present invention, it is furthermore preferred that the modified first paging area is generated by the first user equipment, especially suggested by the first user equipment.

Thereby, it is advantageously possible that the modified first paging area is directly generated based on information available to the user equipment.

During periodic update, or when the user equipment enters connected mode for other reasons, the network learns the current serving cell, and may deduce whether the user equipment has changed its serving cell within the assigned cell set since the last communication. This knowledge can then be used to change the assigned cell set to a more optimized set of cells. In case the network maintains the knowledge of last serving cell for user equipments in idle mode, it can also use this knowledge for optimized paging by means of - in a first step - paging only in the last serving cell, and, only in case the paging during this first step is unsuccessful, a subsequent paging beyond the last serving cell.

Since according to the present invention, the user equipment knows all radio cells of its assigned paging area, it is possible and preferred according to still a further embodiment of the present invention that the user equipment proposes an optimized cell set to the mobile communication network, e.g. comprising the current serving cell and all the neighbor cells within acquisition range. This proposal of the user equipment may be signaled to the mobile communication network explicitly, or in the course of other communication with the network (e.g. periodic update procedures).

According to an embodiment of the present invention (that can be realized alternatively to the other mentioned embodiments or cumulatively), radio cells are no longer required to transmit an area ID, but just a cell ID; at least with regard to user equipments that are functioning according to the present invention, i.e. user equipments that do not require predefined location areas and/or routing areas and/or tracking areas consisting, respectively, of a predefined set of a plurality of radio cells. This means that according to such an embodiment, it is no longer possible to conclude on an operator's network planning strategy from listening to (area ID) information that the radio cells broadcast.

According to the present invention, it is furthermore preferred that the mobile communication network comprises a default paging area repository being accessible to the core network and/or the access network of the mobile communication network, wherein information of the default paging area repository are used for defining a default paging area to be used as the first paging area assigned to the first user equipment upon attachment of the first user equipment to the mobile communication network via a radio cell of the plurality of radio cells - as the serving cell - that the first user equipment uses to for the first time or for the first time after a predetermined default application time interval, wherein preferably the default paging area to be used in relation to a radio cell of the plurality of radio cells is an automatically generated default paging area, especially generated based on
-- the geographical position of the radio cell relative to other radio cells of the plurality of radio cells and/or
-- the geographical position of the radio cell relative to motorways train tracks or other infrastructural objects and/or
-- the geographical position of the radio cell relative to overlapping areas with respect to other radio cells of the plurality of radio cells.

According to the present invention, it is thereby advantageously possible that nowhere in the system (or mobile communication network), is it necessary to plan, maintain and configure (location and/or routing and/or tracking) areas that comprise predefined sets of radio cells. It is only necessary to determine default cell sets (to be stored in the default paging area repository which might be part of the paging area repository) for each radio cell of the mobile communication network. Such default cell sets might comprise that radio cell and additionally a set of adjacent radio cells which may be selected per operator policy (e.g. size of area, number of cells in set, possibly dependent on location such as rural, dense urban). According to the present invention, it is preferred that the determination or definition of default cell sets is automated, e.g., driven by the said operator policy (i.e. the respective radio cell and additionally a set of adjacent (or neighboring) radio cells), based on a repository that contains the identities (IDs) of the radio cells and their location information (coordinates).

In conventional mobile communication networks, optimization of paging areas (i.e. the definition of the location areas and/or routing areas and/or tracking areas) is a tedious and resource consuming task comprised of monitoring, network-wide, the area updating performance and the paging performance, and then applying the cumbersome re-planning and reconfiguration process in an iterative and more or less trial-and-error fashion. According to the present invention, this network planning activity is able to be realized completely autonomously and automatically by the mobile communication network. As a consequence, according to the present invention, there is no risk of inconsistent mobility management data other than, in case of error, defining a default cell set (default paging area associated to a radio cell and stored in the default paging area repository) whose coverage area is non-contiguous. However, this can easily be identified from monitoring the updating procedures in the mobile communication network and corrective action be taken. Additionally, the effect of such an error in the default paging area (associated to a radio cell and assigned to a user equipment being served by that radio cell unless a more suitable paging area for this user equipment is stored and hence available from the paging area repository) is reduced in case that a significant part of the user equipments served by the respective radio cell are user equipments for which a specific paging area is defined (and stored in the paging area repository), hence the erroneous default paging area for that radio cell is not applied for these user equipments.

Therefore, it is preferred according to the present invention, that - depending on the mobility pattern of the first user equipment related to being attached to the serving cell - a specific paging area is used as the first paging area assigned to the first user equipment upon attachment of the first user equipment to the mobile communication network via the serving cell, the specific paging area being stored in the paging area repository related to the first user equipment.

Additionally, it is preferred according to the present invention that the specific paging area is applied to the first user equipment and to the second user equipment- while the first and second user equipment being attached via the serving cell -, wherein the specific paging area is referred to by means of a specific paging area identity.

As a further advantageous consequence of the inventive method according to the present invention, it is very easy to implement a "home cell" or "home area" service by simply assigning the cell set that comprises the home area (one or more cells according to the service design) to the subscription profile and using the associated mobility management activity to determine whether the user equipment is within the home cell or home area. In any serving cell within the home area, the user equipment is assigned the home area set of cells. In any radio cell outside of that area, the assigned cell set of the user equipment will include none of the radio cells of the home area. Likewise, it is advantageously possible according to the present invention, to use this feature to provide other kinds of (user equipment-specific) location based services in a flexible manner, e.g., it might be possible charge reduced tariffs at a specific time in a specific area, e.g. for a trade fair or as an advertising event.

According to the present invention, the lower bound of the size of the cell set is a single cell, i.e. the serving cell. There is no theoretical upper bound for the cell set size.

According to still a further preferred embodiment of the present invention the first paging operation and/or the second paging operation comprises at least partly implicit paging.

Paging and paging response may be explicit or implicit. In the explicit case, there is a dedicated paging message or a dedicated paging response message. In the implicit case, the first signaling or user data for the new communication session is used as paging request or paging response. This can be mixed-and-matched, e.g. explicit paging combined with implicit response, or vice versa. It is also possible to piggy-back the first signaling or user data onto an explicit paging request or paging response.

According to the present invention and in the same way as in conventional mobile communication networks, a user equipment - upon power-up - determines the identity (ID) of the serving cell in the process of cell selection. When the user equipment attaches to the mobile communication network via that cell (as serving cell), there is not necessarily a concept of an area and area identifier according to the present invention; rather, according to the present invention, there is a mechanism for the mobile communication network assigning a set of radio cells, e.g. via transmitting data related to radio cell identifiers or radio cell identities (cell IDs) as the paging area of the user equipment based on the identity (ID) of the serving cell. If any knowledge of specific cell sets for that user equipment exists in the operator domain (i.e. the paging area repository) and the serving cell is included in any of these sets, then the corresponding cell set is assigned as the UE's paging area. Otherwise (i.e. the serving cell is not included in any of these sets), a default cell set for that particular serving cell is assigned to the user equipment. In any case, the serving mobility management unit of the user equipment needs to be aware of the assigned cell set in order to apply the proper paging area when a terminating service request arrives for the user equipment in idle mode. When the user equipment leaves the current cell set, a new set is assigned in the same way as described above; it is not relevant whether this updating procedure also implies a change of serving mobility management unit or not.

According to an alternative embodiment of the present invention, the user equipment may retrieve the cell set that makes up its paging area (i.e. either the default paging area for the respective serving cell or the specific paging area for that user equipment to be used in that serving cell) itself rather than having it assigned by the mobile communication network.

In such a scenario, it is advantageously possible that the user equipment uses a logical name that contains (among other items such as an identity of the user equipment) the identity (ID) of the serving cell and then using that logical name to retrieve the information regarding the cell set to be applied as paging area. A procedure to generate a logical name is known from German patent DE 10 2008 039 427 B4. Details regarding the generation of a logical name from this German patent are hereby incorporated by reference into the present description. This procedure assumes that K is a communication system, which requires support systems or administrative systems for the establishing of communication connections over a communication network, or tries to establish a connection to a communication partner over a communication network. The objective is therefore to select a remote station of a corresponding type and to establish its communication address. The core idea of such a solution is that the communication system K forms or embeds a logistical name N by means of the parameters P1, ... , Pn used for the selection of the remote station. Thereupon the communication system K transmits this thus formed logical name N to a name resolution mechanism which is present in the communication network, which selects a remote station based on this logical name N and a selection function F, and returns its communication address. Therefore the essential advantage of this approach is that name resolution mechanisms (including the for this reason already existing communication protocols) deployed in already existing and present communication networks can be used to select remote stations based on parameter and can be used to transfer its communication address. This is only possible through the above represented solution by embedding the needed parameter for the selection in the logical name to be resolved or by forming the logical name with parameters. Only one parameter or several parameters can be intended for the forming or embedding in the logical name. The parameter can include, for example, information about the location of the communications system. The parameter can include information about the communication provider of the communication system. The parameter can include information about the subscriber contract assigned over the communication system. Generally the parameters can describe the characteristics of the communication system and/or the characteristics of the communication network and/or the characteristics of the user of the communication system.
A technical example of a name resolution mechanism is the Domain Name System (DNS). The DNS is a worldwide database hierarchy distributed over thousands of servers which manages the name space of the internet. This name space is divided into so called zones for which independent administrators are responsible. The DNS is primarily used to convert domain names into IP addresses. This is comparable with a phone book in that the names of the users are resolved into their telephone numbers. In this case, the communication system K forms a domain name by means of the parameters P1, Pn, which can be converted by the DNS into a communication address, of an Internet Protocol (IP) type, by means of a static pre-configured or dynamic selection function F and can be returned to the communications system K.
According to that solution, it is preferred that the parameters P1, Pn or the information for the deriving thereof are statically configured in the communication system K. Furthermore according to that solution, it is preferred that the communication system K receives the parameters P1, Pn or the information for the deriving thereof from the communication network by means of a specific request or through a broadcast. Furthermore according to that solution, it is preferred that the communication system K receives the parameters P1, Pn or the information for the deriving thereof as a result of or in the course of its log in/connection ("Attachment") to the communication network, for example by logging in a mobile terminal into a mobile phone network. Furthermore according to that solution, it is preferred that the communication system K already undertakes the selection of the remote station and constructs the corresponding logical name. Furthermore according to that solution, it is preferred that both the communication system K as also the name resolution mechanism or the selection function F contained therein are involved in the selection of the remote station, as respectively described above. In addition to the logical name N, the selection function F can also take into account further parameters, as for example: the utilization of the support systems and administrative systems; or the communication parameter; or the utilization of the communication network; and additionally, on the basis of this additional parameter, it can select a corresponding remote station and return its communication address, for example the communication address of the support system or administration system which is least used to its capacity.

This mechanism of parameterization can be used to locate the applicable cell set within the paging area repository.

Since it is necessary for the serving mobility management unit to be aware of the cell set (see above), a mechanism is needed for the mobility management unit to learn that cell set; e.g. either the user equipment provides that information to the mobility management unit, or the mobility management unit listens into the communication of the user equipment when retrieving the cell set, or by another mechanism triggered by the mobility management unit.

When the user equipment moves and notifies the mobile communication network about leaving the assigned set of cells (by moving from an old serving cell to a new serving cell), the mobile communication network can change the cell set such that a change of cell sets will no longer occur when the user equipment moves again between these two cells. For this to work, the mobile communication network must know both the old serving cell and the new serving cell, and the initial radio cell on whose basis the (default or user equipment-specific) cell set was selected; e.g. the new serving cell is known from where the signaling of the cell set change originates / terminates, whereas the old cell and the initial cell could be signaled by the user equipment. According to an alternative embodiment of the present invention, the user equipment informs the mobile communication network of all radio cells that it has used or not used as serving cells in the previously assigned set. This provides the possibility that cells the user equipment has never used can be removed from the specific set of cells (i.e. the paging area (to be stored in the paging area repository for that user equipment)), thereby creating a more optimized (=smaller) specific cell set for that user equipment. If the old cell set was a user equipment specific set, then that set will we updated according to the above description. Otherwise, if the old set was a default set, a new UE specific cell set is created for the initial cell (i.e. the one that was used when selecting the cell set).

According to a further preferred embodiment of the present invention, this mechanism of a modification of the cell set can be applied to all members of the cell set, i.e. not only to the initial cell.

According to still a further preferred embodiment of the present invention, the paging area specifically assigned to a user equipment does not need to be identical for all radio cells of that paging area, but can comprise a first cell set for a first subset of the radio cells of the paging area, and a second cell set (differing from the first cell set) for a second subset of the radio cells of that paging area. An example might illustrate that further: The paging area assigned to a user equipment in a given radio cell A might comprise radio cells A, B, C and D as the paging area specific to that user equipment. For a first subset of the radio cells of that paging area (say for radio cells A, B and C), that same paging area (of radio cells A, B, C and D) applies (first cell set), and for a second subset of the radio cells of that paging area (say for radio cell D), another paging area is applied (e.g. comprising not only radio cells A, B, C and D but additionally also radio cell E) (second cell set). This is beneficial, e.g., for the situation that the user equipment in question typically (usually) moves only within the radio coverage area of radio cells A, B, C and D but in case the user equipment is known (by the mobile communication network) to be located in radio cell D (due to an active communication when moving from radio cell C to D, or for other reasons), then the likelihood of that user equipment also moving further to radio cell E is relatively high.

Also, if any errors have been made in determining the default cell sets (e.g. including non-adjacent cells in a set), these errors will be automatically corrected in the learned user equipment-specific set of radio cells (but not in the default sets) by the described self-learning function.

According to a further embodiment of the present invention, the mobile communication network comprises a facility to monitor the cases where user equipment-specific sets of radio cells are created by removing cells from default sets, and thereby even correct errors and inconsistencies in the default cells sets (cells that are never reported as being used within a default cell set by any user equipment may be removed from the default sets of radio cells).

Today, the areas and the cells that they contain are planned in operators' planning tools and are then configured as appropriate in mobility management units and cells. According to the current invention, it is only necessary to configure the cell's ID within the base station entity (such as NodeBs and/or eNodeBs). The mobility management units, in turn, must be aware of the serving cell sets of all the user equipments that they currently serve and, when required, new cell sets to be assigned to the user equipments. Ideally, all the necessary information would no longer be configured individually in the network nodes but rather made available via an external (possibly central) database, e.g. the paging area repository, (where, at least for the default cell sets, this could even be the operator's planning database where those cell sets are managed). It would then be required that the mobility management units can modify the cell sets stored in the database when cell set alterations as described above occur. A policy framework that governs the permissions to alter the stored data could be applied in order to enforce associated operator strategies.

According to still a further preferred embodiment of the present invention, the user equipment is allowed to modify the cell sets stored in the paging area repository (or data base), e.g., when the user equipment leaves a cell set, it alters its old cell set such that members of the set that it never used as serving cells are removed. According to a variant of such an embodiment, the user equipment makes such proposals for modifying the cell set (i.e. specific paging area) but the decision (whether to actually modify the cell set or not) is made in the mobile communication network. According to that embodiment, a policy framework to manage write permissions (by the respective user equipment) onto the cell set database (i.e. the paging area repository) is realized in the mobile communication network.

According to the present invention, a mobile communication network implementing the inventive method comprises the following components:
-- A persistent repository that maintains a default cell set (default paging area) for each radio cell of the mobile communication network (default paging area repository).
-- A persistent repository that maintains the user equipment-specific cell sets (i.e. the specific paging areas for all user equipments, paging area repository).
-- Procedures that enable the user equipment and the network entities to retrieve the information from the respective repositories.
-- Procedures that enable the user equipment and the network entities to modify the information in the repositories.
-- A policy framework that governs the permissions for cell set data modification.
-- Algorithms and mechanisms to optimize the cell sets and to "auto-learn" the best possible cell set membership.

Furthermore, the present invention relates to a mobile communication network for an enhanced and an adaptive mobility management, wherein at least a first user equipment and a second user equipment are attached to the mobile communication network, wherein the mobile communication network comprises at least a core network and an access network, wherein the access network comprises a plurality of radio cells, one radio cell among the plurality of radio cells being the serving cell of both the first user equipment and the second user equipment, wherein the mobile communication network is configured such that - while the first user equipment and the second user equipment are, during an initial time interval, in an idle mode, respectively -
-- upon a first mobile terminated service targeting the first user equipment - a first paging operation is performed targeting the first user equipment,
   and
-- upon a second mobile terminated service targeting the second user equipment - a second paging operation is performed targeting the second user equipment,
wherein the mobile communication network is configured such that the first paging operation is performed - during the initial time interval - in a first paging area, and the second paging operation is performed - during the initial time interval - in a second paging area, the first paging area being defined as corresponding to either the serving cell or a first set of radio cells specific of the first user equipment, and the second paging area being defined as corresponding to either the serving cell or to a second set of radio cells specific of the second user equipment, and the mobile communication network is configured to define the paging areas assigned to the first and second user equipments such that a mandatory overlap between the first paging area and the second paging area is restricted to the serving cell, wherein the first paging area and the second paging area differ from each other dependent on current mobility needs and a speed of the first user equipment and the second user equipment.

Thereby, it is advantageously possible to provide a mobile communication network such that the advantages described in relation to the inventive method can be realized and more flexibility is achieved for an enhanced and an adaptive mobility management within a mobile communication network such that network planning efforts can be dramatically reduced.

Furthermore, the present invention relates to a system for an enhanced and an adaptive mobility management, the system comprising a mobile communication network and a plurality of user equipments, wherein at least a first user equipment and a second user equipment are attached to the mobile communication network, wherein the mobile communication network comprises at least a core network and an access network, wherein the access network comprises a plurality of radio cells, one radio cell among the plurality of radio cells being the serving cell of both the first user equipment and the second user equipment, wherein the system is configured such that - while the first user equipment and the second user equipment are, during an initial time interval, in an idle mode, respectively -
-- upon a first mobile terminated service targeting the first user equipment - a first paging operation is performed targeting the first user equipment,
   and
-- upon a second mobile terminated service targeting the second user equipment - a second paging operation is performed targeting the second user equipment,
wherein the system is configured such that the first paging operation is performed - during the initial time interval - in a first paging area, and the second paging operation is performed - during the initial time interval - in a second paging area, the first paging area being defined as corresponding to a first set of radio cells specific of the first user equipment, and the second paging area being defined as corresponding to a second set of radio cells specific of the second user equipment, and the mobile communication network is configured to define the paging areas assigned to the first and second user equipments such that a mandatory overlap between the first paging area and the second paging area is restricted to the serving cell, wherein - in case that the first paging area corresponds to the first set of radio cells and/or the second paging area corresponds to the second set of radio cells - the first paging area and the second paging area differ from each other dependent on current mobility needs and a speed of the first user equipment and the second user equipment.

Thereby, it is advantageously possible to provide a system such that more flexibility is achieved for an enhanced and an adaptive mobility management within a mobile communication network such that network planning efforts can be dramatically reduced.

Furthermore, the present invention relates to a user equipment adapted to be used in connection with a mobile communication network and a system according to the present invention.

Additionally, the present invention relates to a program comprising a computer readable program code which, when executed on a computer, causes the computer to perform the inventive method.

Still additionally, the present invention relates to a computer program product for an enhanced and an adaptive mobility management within a mobile communication network, the computer program product comprising a computer program stored on a storage medium, the computer program comprising program code which, when executed on a computer, causes the computer to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrate a mobile communication network and a plurality of user equipments.
Figure 2 schematically illustrates an example of a first paging area of a first user equipment.
Figure 3 schematically illustrates an example of a second paging area of a second user equipment.
Figure 4 schematically illustrates an example of a default paging area.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

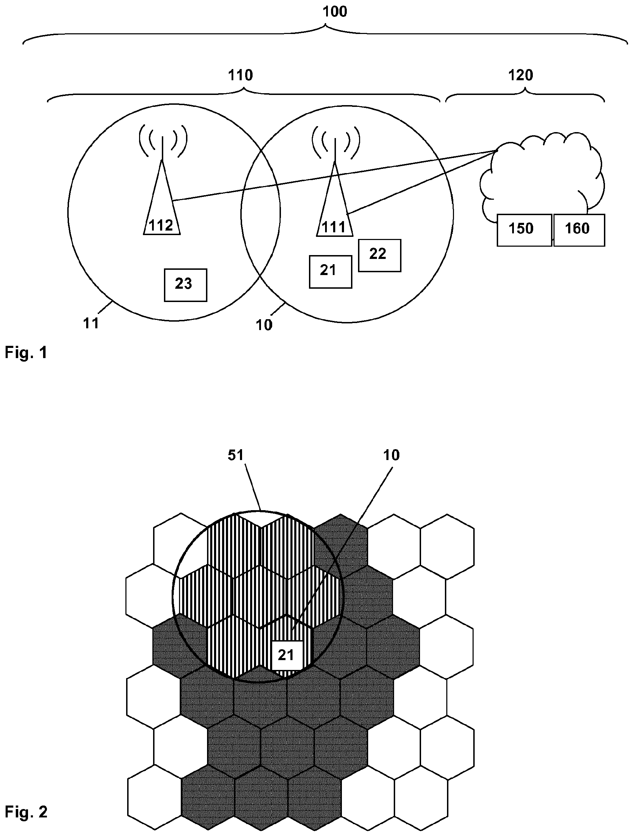

In Figure 1, a mobile communication network 100, especially a public land mobile network 100, is schematically shown, the mobile communication network 100 comprising an access network 110 and a core network 120. The mobile communication network 100 is preferably a cellular telecommunications network comprising typically a plurality of network cells (or radio cells), wherein two neighboring network cells (or radio cells) are represented in Figure 1 by means of reference signs 10 and 11. The mobile communication network 100 typically comprises a plurality of user equipments or telecommunication devices. The plurality of user equipments are referred to by means of reference signs 21, 22, 23, wherein reference sign 21 refers to a first user equipment, reference sign 22 refers to a second user equipment, and reference sign 23 refers to a third user equipment. The access network 110 of the mobile communication network 100 comprises, in the exemplary representation of Figure 1, a first base station entity 111, serving the (first) radio cell 10. Furthermore, a neighbor (second) base station entity 112, serving the neighbor (second) radio cell 11, is schematically shown. The base transceiver stations 111, 112 are typically base stations or base station entities, e.g. a NodeB or an eNodeB base transceiver station.

In order for the mobile communication network 100 to provide communication services to the telecommunication devices 21, 22, 23, it is necessary that a connection is established between the mobile communication network 100 and one or a plurality of the telecommunication devices 21, 22, 23.

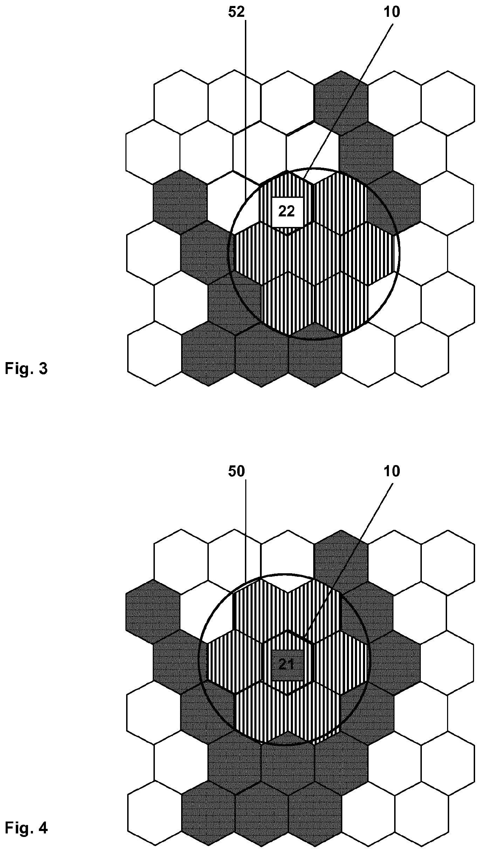

In order to increase battery life time, user equipments 21, 22, 23 have a tendency to be in an idle mode in case that no active communication is occurring. In such an idle mode, user equipments 21, 22, 23 are allowed to move between different radio cells of the mobile communication network 100. In case of an incoming mobile terminated service for one of the user equipments 21, 22, 23, the respective user equipment 21, 22, 23 needs to be paged within a paging area, corresponding typically to a plurality of radio cells but comprising at least the serving cell of the mobile communication network 100. In Figures 2 to 4, it is assumed that the serving cell corresponds to the first radio cell 10. All radio cells are schematically indicated by means of hexagons. According to the present invention, a paging area, i.e. a set of radio cells, is assigned to each of the user equipments 21, 22, 23, and this paging area is potentially different for each of the user equipments. Of course it is also possible according to the present invention that for two or more user equipments the respective paging areas are identical or overlap in larger or smaller parts. In Figure 2, an example of the paging area, also called first paging area 51, of the first user equipment 21 is schematically shown. In Figure 3, an example of the paging area, also called second paging area 52, of the second user equipment 22 is schematically shown. As can be seen by comparing Figures 2 and 3, the overlap of the first paging area 51 and the second paging area 52 extends (only) to the serving cell 10, i.e. the overlap does not (necessarily) comprise a plurality of radio cells as compared to conventional mobile communication networks where such an overlap would, at least, comprise a plurality of radio cells being part of a tracking area (and/or of a location area and/or of a routing area).

In Figure 4, an example of a default paging area 50 of the serving cell 10 is schematically shown.

The mobile communication network 100 comprises - as shown in Figure 1 - databases or repositories related to the paging areas or the different user equipments 21, 22, 23 in view of their mobility pattern and current needs: A paging area repository 150. Furthermore, the mobile communication network 100 comprises a default paging area repository 160, which might be part of the paging area repository 150.

By means of the inventive architecture and mobility management approach, it is advantageously possible that network planning efforts can be dramatically reduced. This is due to the fact that it is possible to assign a certain set of radio cells that could be individually tailored, i.e. be specific, to each one of the user equipments within the mobile communication network, and which can be adapted to the specific mobility needs and/or mobility pattern of that user equipment.

## Claims

1. Method for an enhanced and an adaptive mobility management within a mobile communication network (100), wherein at least a first user equipment (21) and a second user equipment (22) are attached to the mobile communication network (100),
wherein the mobile communication network (100) comprises at least a core network (120) and an access network (110),
wherein the access network (110) comprises a plurality of radio cells (10, 11), one radio cell among the plurality of radio cells (10, 11) being the serving cell (10) of both the first user equipment (21) and the second user equipment (22),
wherein - while the first user equipment (21) and the second user equipment (22) are, during an initial time interval, in an idle mode, respectively - the method comprises at least the steps performed by the mobile communication network (100) of:
-- in a first step - upon a first mobile terminated service targeting the first user equipment (21) - a first paging operation is performed targeting the first user equipment (21),
and
-- in a second step, either during the first step or subsequent to the first step, - upon a second mobile terminated service targeting the second user equipment (22) - a second paging operation is performed targeting the second user equipment (22), wherein the first paging operation is performed - during the initial time interval - in a first paging area (51), and the second paging operation is performed - during the initial time interval - in a second paging area (52), the first paging area (51) being defined as corresponding to a first set of radio cells - comprising the serving cell (10) - specific of the first user equipment (21), and the second paging area (52) being defined as corresponding to a second set of radio cells - comprising the serving cell (10) - specific of the second user equipment (22),
wherein the mobile communication network (100) defines the paging areas assigned to the first and second user equipments such that a mandatory overlap between the first paging area (51) and the second paging area (52) is restricted to the serving cell (10), wherein the first paging area (51) and the second paging area (52) differ from each other depending on current mobility needs and a speed of the first user equipment (21) and the second user equipment (22).

2. Method according to claim 1, wherein the first paging area (51) and the second paging area (52) are different with the exception of the serving cell (10).

3. Method according to one of the preceding claims, wherein the first paging area (51) and the second paging area (52) differ from each other depending on
-- a mobility pattern - derived from a preceding time interval - of the first user equipment (21) and of the second user equipment (22).

4. Method according to one of the preceding claims, wherein - during a further time interval subsequent to the initial time interval and in case that a reduced mobility of the first user equipment (21) is detected during a predetermined time interval - a subsequent paging operation, applied upon a subsequent first mobile terminated service targeting the first user equipment (21), is performed - instead of in the first paging area (51) - in a modified first paging area (51'), the modified first paging area (51') comprising less radio cells of the plurality of radio cells (10, 11) than compared to the first paging area (51) used during the initial time interval, wherein especially an information related to or regarding the modified first paging area (51') is communicated to the first user equipment (21) during a time interval that the first user equipment (21) is in connected mode, especially in connected mode for other reasons than transmitting the information regarding the modified first paging area (51').

5. Method according to claim 4, wherein information related to or regarding the first paging area or the modified first paging area
-- is stored in a paging area repository (150), the paging area repository (150) being accessible to the core network (120) and/or the access network (110) of the mobile communication network (100), and
-- is either communicated, by the mobile communication network (100), to the first user equipment (21) or is accessible - especially via the paging area repository (150) - to the first user equipment (21),
wherein especially an information related to or regarding the first paging area or the modified first paging area is exchanged, especially directly, between the first user equipment and the paging area repository.

6. Method according to one of claims 4 or 5, wherein the modified first paging area (51') is generated by the first user equipment (21), especially suggested by the first user equipment (21).

7. Method according to one of the preceding claims, wherein the mobile communication network (100) comprises a default paging area repository (160) being accessible to the core network (120) and/or the access network (110) of the mobile communication network (100), wherein information of the default paging area repository (160) are used for defining a default paging area (50) to be used as the first paging area (51) assigned to the first user equipment (21) upon attachment of the first user equipment (21) to the mobile communication network (100) via a radio cell of the plurality of radio cells (10, 11) - as the serving cell (10) - that the first user equipment (21) attaches to for the first time or for the first time after a predetermined default application time interval,
wherein preferably the default paging area (50) to be used in relation to a radio cell of the plurality of radio cells (10, 11) is an automatically generated default paging area (50), especially generated based on
-- a geographical position of the radio cell relative to other radio cells of the plurality of radio cells (10, 11) and/or
-- a geographical position of the radio cell relative to motorways train tracks or other infrastructural objects and/or
-- a geographical position of the radio cell relative to overlapping areas with respect to other radio cells of the plurality of radio cells (10, 11).

8. Method according to claim 3, wherein - depending on the mobility pattern of the first user equipment (21) related to being attached to the serving cell (10) - a specific paging area is used as the first paging area (51) assigned to the first user equipment (21) upon attachment of the first user equipment (21) to the mobile communication network (100) via the serving cell (10), the specific paging area being stored in the paging area repository (150) related to the first user equipment (21).

9. Method according to claim 8, wherein the specific paging area is applied to the first user equipment (21) and to the second user equipment (22) - while the first and second user equipment (21, 22) being attached via the serving cell (10) -, wherein the specific paging area is referred to by means of a specific paging area identity.

10. Method according to one of the preceding claims, wherein the first paging operation and/or the second paging operation comprises at least partly implicit paging.

11. Mobile communication network (100) for an enhanced and an adaptive mobility management, wherein at least a first user equipment (21) and a second user equipment (22) are attached to the mobile communication network (100), wherein the mobile communication network (100) comprises at least a core network (120) and an access network (110),
wherein the access network (110) comprises a plurality of radio cells (10, 11), one radio cell among the plurality of radio cells (10, 11) being the serving cell (10) of both the first user equipment (21) and the second user equipment (22),
wherein the mobile communication network (100) is configured such that - while the first user equipment (21) and the second user equipment (22) are, during an initial time interval, in an idle mode, respectively -
-- upon a first mobile terminated service targeting the first user equipment (21) - a first paging operation is performed targeting the first user equipment (21), and
-- upon a second mobile terminated service targeting the second user equipment (22) - a second paging operation is performed targeting the second user equipment (22),
wherein the mobile communication network (100) is configured such that the first paging operation is performed - during the initial time interval - in a first paging area (51), and the second paging operation is performed - during the initial time interval - in a second paging area (52), the first paging area (51) being defined as corresponding to a first set of radio cells specific of the first user equipment (21), and the second paging area (52) being defined as corresponding to a second set of radio cells specific of the second user equipment (22), and the mobile communication network (100) is configured to define the paging areas assigned to the first and second user equipments such that a mandatory overlap between the first paging area (51) and the second paging area (52) is restricted to the serving cell (10), wherein the first paging area (51) and the second paging area (52) differ from each other depending on current mobility needs and a speed of the first user equipment (21) and the second user equipment (22).

12. System for an enhanced and an adaptive mobility management, the system comprising a mobile communication network (100) and a plurality of user equipments (21, 22, 23), wherein at least a first user equipment (21) and a second user equipment (22) are attached to the mobile communication network (100), wherein the mobile communication network (100) comprises at least a core network (120) and an access network (110),
wherein the access network (110) comprises a plurality of radio cells (10, 11), one radio cell among the plurality of radio cells (10, 11) being the serving cell (10) of both the first user equipment (21) and the second user equipment (22),
wherein the system is configured such that - while the first user equipment (21) and the second user equipment (22) are, during an initial time interval, in an idle mode, respectively -
-- upon a first mobile terminated service targeting the first user equipment (21) - a first paging operation is performed targeting the first user equipment (21),
and
-- upon a second mobile terminated service targeting the second user equipment (22) - a second paging operation is performed targeting the second user equipment (22),
wherein the system is configured such that the first paging operation is performed - during the initial time interval - in a first paging area (51), and the second paging operation is performed - during the initial time interval - in a second paging area (52), the first paging area (51) being defined as corresponding to a first set of radio cells specific of the first user equipment (21), and the second paging area (52) being defined as corresponding to a second set of radio cells specific of the second user equipment (22), and the mobile communication network (100) is configured to define the paging areas assigned to the first and second user equipments such that a mandatory overlap between the first paging area (51) and the second paging area (52) is restricted to the serving cell (10), wherein - in case that the first paging area (51) corresponds to the first set of radio cells and/or the second paging area (52) corresponds to the second set of radio cells - the first paging area (51) and the second paging area (52) differ from each other depending on current mobility needs and a speed of the first user equipment (21) and the second user equipment (22).

13. Program comprising a computer readable program code which, when executed on a computer, causes the computer to perform a method according one of claims 1 to 9.

14. Computer program product for an enhanced and an adaptive mobility management within a mobile communication network (100), the computer program product comprising a computer program stored on a storage medium, the computer program comprising program code which, when executed on a computer, causes the computer to perform a method according one of claims 1 to 9.

## Patentansprüche

1. Verfahren für ein erweitertes und ein adaptives Mobilitätsmanagement innerhalb eines Mobilkommunikationsnetzes (100), wobei mindestens eine erste Nutzerausrüstung (21) und eine zweite Nutzerausrüstung (22) an das Mobilkommunikationsnetz (100) angebunden sind,
wobei das Mobilkommunikationsnetz (100) mindestens ein Kernnetz (120) und ein Zugangsnetz (110) umfasst,
wobei das Zugangsnetz (110) mehrere Funkzellen (10, 11) umfasst, wobei eine Funkzelle unter den mehreren Funkzellen (10, 11) die bedienende Zelle (10) sowohl der ersten Nutzerausrüstung (21) als auch der zweiten Nutzerausrüstung (22) ist,
wobei, während die erste Nutzerausrüstung (21) und die zweite Nutzerausrüstung (22) während eines anfänglichen Zeitintervalls jeweils in einem Leerlaufmodus sind, das Verfahren mindestens die folgenden durch das Mobilkommunikationsnetz (100) ausgeführten Schritte umfasst:
- in einem ersten Schritt - wenn ein erster mobil-terminierter Dienst auf die erste Nutzerausrüstung (21) gerichtet ist - wird eine erste Paging-Operation ausgeführt, die auf die erste Nutzerausrüstung (21) gerichtet ist, und
- in einem zweiten Schritt, entweder während des ersten Schrittes oder nach dem ersten Schritt - wenn ein zweiter mobil-terminierter Dienst auf die zweite Nutzerausrüstung (22) gerichtet ist - wird eine zweite Paging-Operation ausgeführt, die auf die zweite Nutzerausrüstung (22) gerichtet ist,
wobei die erste Paging-Operation - während des anfänglichen Zeitintervalls - in einem ersten Paging-Bereich (51) ausgeführt wird und die zweite Paging-Operation - während des anfänglichen Zeitintervalls - in einem zweiten Paging-Bereich (52) ausgeführt wird, wobei der erste Paging-Bereich (51) als einem ersten Satz Funkzellen entsprechend definiert ist - der die bedienende Zelle (10) umfasst - und für die erste Nutzerausrüstung (21) spezifisch ist - und der zweite Paging-Bereich (52) als einem zweiten Satz Funkzellen entsprechend definiert ist - der die bedienende Zelle (10) umfasst - und für die zweite Nutzerausrüstung (22) spezifisch ist,
wobei das Mobilkommunikationsnetz (100) die Paging-Bereiche, die der ersten und der zweiten Nutzerausrüstung zugewiesen werden, dergestalt definiert, dass eine obligatorische Überlappung zwischen dem ersten Paging-Bereich (51) und dem zweiten Paging-Bereich (52) auf die bedienende Zelle (10) beschränkt ist, wobei der erste Paging-Bereich (51) und der zweite Paging-Bereich (52) sich in Abhängigkeit von den momentanen Mobilitätserfordernissen und einer Geschwindigkeit der ersten Nutzerausrüstung (21) und der zweiten Nutzerausrüstung (22) voneinander unterscheiden.

2. Verfahren nach Anspruch 1, wobei der erste Paging-Bereich (51) und der zweite Paging-Bereich (52) mit Ausnahme der bedienenden Zelle (10) verschieden sind.

3. Verfahren nach einem der vorangehenden Ansprüche, wobei der erste Paging-Bereich (51) und der zweite Paging-Bereich (52) sich in Abhängigkeit von
- einem - aus einem vorangegangenen Zeitintervall - abgeleiteten Mobilitätsmuster der ersten Nutzerausrüstung (21) und der zweiten Nutzerausrüstung (22) voneinander unterscheiden.

4. Verfahren nach einem der vorangehenden Ansprüche, wobei - während eines weiteren Zeitintervalls nach dem anfänglichen Zeitintervall und für den Fall, dass eine verringerte Mobilität der ersten Nutzerausrüstung (21) während eines zuvor festgelegten Zeitintervalls detektiert wird - eine anschließende Paging-Operation, die auf einen anschließenden ersten mobil-terminierten Dienst, der auf die erste Nutzerausrüstung (21) gerichtet ist, angewendet wird - nicht in dem ersten Paging-Bereich (51) - sondern in einem modifizierten ersten Paging-Bereich (51') ausgeführt wird, wobei der modifizierte erste Paging-Bereich (51') weniger Funkzellen der mehreren Funkzellen (10, 11) als der erste Paging-Bereich (51) umfasst, der während des anfänglichen Zeitintervalls verwendet wird, wobei insbesondere eine Information, die sich auf den modifizierten ersten Paging-Bereich (51') bezieht oder diesen betrifft, an die erste Nutzerausrüstung (21) während eines Zeitintervalls übermittelt wird, in dem sich die erste Nutzerausrüstung (21) im verbundenen Modus befindet, insbesondere im verbundenen Modus aus anderen Gründen als dem Senden der Informationen bezüglich des modifizierten ersten Paging-Bereichs (51').

5. Verfahren nach Anspruch 4, wobei Informationen, die sich auf den ersten Paging-Bereich oder den modifizierten ersten Paging-Bereich beziehen oder diesen betreffen,
- in einem Paging-Bereich-Repositorium (150) gespeichert werden, wobei das Paging-Bereich-Repositorium (150) für das Kernnetz (120) und/oder das Zugangsnetz (110) des Mobilkommunikationsnetzes (100) zugänglich ist, und
- entweder durch das Mobilkommunikationsnetz (100) an die erste Nutzerausrüstung (21) übermittelt werden oder - insbesondere über das Paging-Bereich-Repositorium (150) - für die erste Nutzerausrüstung (21) zugänglich sind,
wobei insbesondere eine Information, die sich auf den ersten Paging-Bereich oder den modifizierten ersten Paging-Bereich bezieht oder diesen betrifft, insbesondere direkt zwischen der ersten Nutzerausrüstung und dem Paging-Bereich-Repositorium ausgetauscht wird.

6. Verfahren nach einem der Ansprüche 4 oder 5, wobei der modifizierte erste Paging-Bereich (51') durch die erste Nutzerausrüstung (21) generiert wird, insbesondere durch die erste Nutzerausrüstung (21) vorgeschlagen wird.

7. Verfahren nach einem der vorangehenden Ansprüche, wobei das Mobilkommunikationsnetz (100) ein Standard-Paging-Bereich-Repositorium (160) umfasst, das für das Kernnetz (120) und/oder das Zugangsnetz (110) des Mobilkommunikationsnetzes (100) zugänglich ist, wobei Informationen des Standard-Paging-Bereich-Repositoriums (160) dafür verwendet werden, einen Standard-Paging-Bereich (50) zu definieren, der als der erste Paging-Bereich (51) zu verwenden ist, welcher der ersten Nutzerausrüstung (21) zugewiesen wird, sobald die erste Nutzerausrüstung (21) an das Mobilkommunikationsnetz (100) über eine Funkzelle der mehreren Funkzellen (10, 11) - als die bedienende Zelle (10) - angebunden wird, an die sich die erste Nutzerausrüstung (21) zum ersten Mal oder zum ersten Mal nach einem zuvor festgelegten Standard-Anwendungszeitintervall anbindet,
wobei bevorzugt der Standard-Paging-Bereich (50), der in Bezug auf eine Funkzelle der mehreren Funkzellen (10, 11) zu verwenden ist, ein automatisch generierter Standard-Paging-Bereich (50) ist, der insbesondere generiert wird auf der Basis
- einer geographischen Position der Funkzelle relativ zu anderen Funkzellen der mehreren Funkzellen (10, 11), und/oder
- einer geographischen Position der Funkzelle relativ zu Kraftfahrtstraßen, Eisenbahngleisen oder anderen Infrastrukturobjekten und/oder
- einer geographischen Position der Funkzelle relativ zu überlappenden Bereichen mit Bezug auf die anderen Funkzellen der mehreren Funkzellen (10, 11).

8. Verfahren nach Anspruch 3, wobei - in Abhängigkeit von dem Mobilitätsmuster der ersten Nutzerausrüstung (21) im Zusammenhang mit der Anbindung an die bedienende Zelle (10) - ein spezieller Paging-Bereich als der erste Paging-Bereich (51) verwendet wird, welcher der ersten Nutzerausrüstung (21) zugewiesen wird, sobald die erste Nutzerausrüstung (21) an das Mobilkommunikationsnetz (100) über die bedienende Zelle (10) angebunden wurde, wobei der spezielle Paging-Bereich in dem Paging-Bereich-Repositorium (150) gespeichert wird, das zu der ersten Nutzerausrüstung (21) in Beziehung steht.

9. Verfahren nach Anspruch 8, wobei der spezielle Paging-Bereich auf die erste Nutzerausrüstung (21) und die zweite Nutzerausrüstung (22) angewendet wird - während die erste und die zweite Nutzerausrüstung (21, 22) über die bedienende Zelle (10) angebunden sind - wobei auf den speziellen Paging-Bereich mittels einer spezifischen Paging-Bereich-Identität verwiesen wird.

10. Verfahren nach einem der vorangehenden Ansprüche, wobei die erste Paging-Operation und/oder die zweite Paging-Operation mindestens teilweise implizites Paging umfassen.

11. Mobilkommunikationsnetz (100) für ein erweitertes und ein adaptives Mobilitätsmanagement, wobei mindestens eine erste Nutzerausrüstung (21) und eine zweite Nutzerausrüstung (22) an das Mobilkommunikationsnetz (100) angebunden sind,
wobei das Mobilkommunikationsnetz (100) mindestens ein Kernnetz (120) und ein Zugangsnetz (110) umfasst,
wobei das Zugangsnetz (110) mehrere Funkzellen (10, 11) umfasst, wobei eine Funkzelle unter den mehreren Funkzellen (10, 11) die bedienende Zelle (10) sowohl der ersten Nutzerausrüstung (21) als auch der zweiten Nutzerausrüstung (22) ist,
wobei das Mobilkommunikationsnetz (100) so ausgestaltet ist, dass - während die erste Nutzerausrüstung (21) und die zweite Nutzerausrüstung (22) während eines anfänglichen Zeitintervalls jeweils in einem Leerlaufmodus sind -
- wenn ein erster mobil-terminierter Dienst, der auf die erste Nutzerausrüstung (21) gerichtet ist - eine erste Paging-Operation ausgeführt wird, die auf die erste Nutzerausrüstung (21) gerichtet ist,
- und wenn ein zweiter mobil-terminierter Dienst, der auf die zweite Nutzerausrüstung (22) gerichtet ist - eine zweite Paging-Operation ausgeführt wird, die auf die zweite Nutzerausrüstung (22) gerichtet ist,
wobei das Mobilkommunikationsnetz (100) so ausgestaltet ist, dass die erste Paging-Operation - während des anfänglichen Zeitintervalls - in einem ersten Paging-Bereich (51) ausgeführt wird und die zweite Paging-Operation während des anfänglichen Zeitintervalls in einem zweiten Paging-Bereich (52) ausgeführt wird, wobei der erste Paging-Bereich (51) als einem ersten Satz Funkzellen entsprechend definiert ist und für die erste Nutzerausrüstung (21) spezifisch ist, und der zweite Paging-Bereich (52) als einem zweiten Satz Funkzellen entsprechend definiert ist und für die zweite Nutzerausrüstung (22) spezifisch ist, und
das Mobilkommunikationsnetz (100) dafür ausgestaltet ist, die Paging-Bereiche, die der ersten und der zweiten Nutzerausrüstung zugewiesen werden, dergestalt zu definieren, dass eine obligatorische Überlappung zwischen dem ersten Paging-Bereich (51) und dem zweiten Paging-Bereich (52) auf die bedienende Zelle (10) beschränkt ist, wobei der erste Paging-Bereich (51) und der zweite Paging-Bereich (52) sich in Abhängigkeit von den momentanen Mobilitätserfordernissen und einer Geschwindigkeit der ersten Nutzerausrüstung (21) und der zweiten Nutzerausrüstung (22) voneinander unterscheiden.

12. System für ein erweitertes und ein adaptives Mobilitätsmanagement, wobei das System ein Mobilkommunikationsnetz (100) und mehrere Nutzerausrüstungen (21, 22, 23) umfasst, wobei mindestens eine erste Nutzerausrüstung (21) und eine zweite Nutzerausrüstung (22) an das Mobilkommunikationsnetz (100) angebunden sind,
wobei das Mobilkommunikationsnetz (100) mindestens ein Kernnetz (120) und ein Zugangsnetz (110) umfasst,
wobei das Zugangsnetz (110) mehrere Funkzellen (10, 11) umfasst, wobei eine Funkzelle unter den mehreren Funkzellen (10, 11) die bedienende Zelle (10) sowohl der ersten Nutzerausrüstung (21) als auch der zweiten Nutzerausrüstung (22) ist,
wobei das System so ausgestaltet ist, dass - während die erste Nutzerausrüstung (21) und die zweite Nutzerausrüstung (22) während eines anfänglichen Zeitintervalls jeweils in einem Leerlaufmodus sind -
- wenn ein erster mobil-terminierter Dienst, der auf die erste Nutzerausrüstung (21) gerichtet ist - eine erste Paging-Operation ausgeführt wird, die auf die erste Nutzerausrüstung (21) gerichtet ist,
- und wenn ein zweiter mobil-terminierter Dienst, der auf die zweite Nutzerausrüstung (22) gerichtet ist - eine zweite Paging-Operation ausgeführt wird, die auf die zweite Nutzerausrüstung (22) gerichtet ist,
wobei das System so ausgestaltet ist, dass die erste Paging-Operation - während des anfänglichen Zeitintervalls - in einem ersten Paging-Bereich (51) ausgeführt wird und die zweite Paging-Operation - während des anfänglichen Zeitintervalls - in einem zweiten Paging-Bereich (52) ausgeführt wird, wobei der erste Paging-Bereich (51) als einem ersten Satz Funkzellen entsprechend definiert ist und für die erste Nutzerausrüstung (21) spezifisch ist, und der zweite Paging-Bereich (52) als einem zweiten Satz Funkzellen entsprechend definiert ist und für die zweite Nutzerausrüstung (22) spezifisch ist, und
das Mobilkommunikationsnetz (100) dafür ausgestaltet ist, die Paging-Bereiche, die der ersten und der zweiten Nutzerausrüstung zugewiesen werden, dergestalt zu definieren, dass eine obligatorische Überlappung zwischen dem ersten Paging-Bereich (51) und dem zweiten Paging-Bereich (52) auf die bedienende Zelle (10) beschränkt ist, wobei - für den Fall, dass der erste Paging-Bereich (51) dem ersten Satz Funkzellen entspricht und/oder der zweite Paging-Bereich (52) dem zweiten Satz von Funkzellen entspricht - der erste Paging-Bereich (51) und der zweite Paging-Bereich (52) sich in Abhängigkeit von den momentanen Mobilitätserfordernissen und einer Geschwindigkeit der ersten Nutzerausrüstung (21) und der zweiten Nutzerausrüstung (22) voneinander unterscheiden.

13. Programm, das einen computerlesbaren Programmcode umfasst, der, wenn er auf einem Computer ausgeführt wird, den Computer veranlasst, ein Verfahren nach einem der Ansprüche 1 bis 9 auszuführen.

14. Computerprogrammprodukt für ein erweitertes und ein adaptives Mobilitätsmanagement innerhalb eines Mobilkommunikationsnetzes (100), wobei das Computerprogrammprodukt ein Computerprogramm umfasst, das auf einem Speichermedium gespeichert ist, wobei das Computerprogramm Programmcode umfasst, der, wenn er auf einem Computer ausgeführt wird, den Computer veranlasst, ein Verfahren nach einem der Ansprüche 1 bis 9 auszuführen.

## Revendications

1. Procédé de gestion de mobilité améliorée et adaptative au sein d'un réseau de communication mobile (100), dans lequel au moins un premier équipement utilisateur (21) et un second équipement utilisateur (22) sont rattachés au réseau de communication mobile (100),
dans lequel le réseau de communication mobile (100) comprend au moins un réseau central (120) et un réseau d'accès (110), dans lequel le réseau d'accès (110) comprend une pluralité de cellules radio (10, 11), une cellule radio parmi la pluralité de cellules radio (10, 11) étant la cellule de desserte (10) à la fois du premier équipement utilisateur (21) et du second équipement utilisateur (22),
dans lequel - tandis que le premier équipement utilisateur (21) et le second équipement utilisateur (22) sont, pendant un intervalle de temps initial, en mode veille, respectivement - le procédé comprend au moins les étapes suivantes effectuées par le réseau de communication mobile (100) :
- dans une première étape - lors d'un premier service à destination mobile ciblant le premier équipement utilisateur (21) - une première opération de radiomessagerie est effectuée visant le premier équipement utilisateur (21), et
- dans une seconde étape, soit pendant la première étape, soit après la première étape - lors d'un second service à destination mobile ciblant le second équipement utilisateur (22) - une seconde opération de radiomessagerie est effectuée visant le second équipement utilisateur (22),
dans lequel la première opération de radiomessagerie est effectuée - pendant l'intervalle de temps initial - dans une première zone de radiomessagerie (51), et la seconde opération de radiomessagerie est effectuée - pendant l'intervalle de temps initial - dans une seconde zone de radiomessagerie (52), la première zone de radiomessagerie (51) étant définie comme correspondant à un premier ensemble de cellules radio - comprenant la cellule de desserte (10) - spécifiques du premier équipement utilisateur (21), et la seconde zone de radiomessagerie (52) étant définie comme correspondant à un second ensemble de cellules radio - comprenant la cellule de desserte (10) - spécifiques du second équipement utilisateur (22),
dans lequel le réseau de communication mobile (100) définit les zones de radiomessagerie attribuées aux premier et second équipements utilisateurs de telle sorte qu'un chevauchement obligatoire entre la première zone de radiomessagerie (51) et la seconde zone de radiomessagerie (52) est limité à la cellule de desserte (10), dans lequel la première zone de radiomessagerie (51) et la seconde zone de radiomessagerie (52) diffèrent l'une de l'autre en fonction des besoins actuels en mobilité et de la vitesse du premier équipement utilisateur (21) et du second équipement utilisateur (22).

2. Procédé selon la revendication 1, dans lequel la première zone de radiomessagerie (51) et la seconde zone de radiomessagerie (52) sont différentes à l'exception de la cellule de desserte (10).

3. Procédé selon l'une des revendications précédentes, dans lequel la première zone de radiomessagerie (51) et la seconde zone de radiomessagerie (52) diffèrent l'une de l'autre en fonction de
- un modèle de mobilité - dérivé d'un intervalle de temps précédent - du premier équipement utilisateur (21) et du second équipement utilisateur (22).

4. Procédé selon l'une des revendications précédentes, dans lequel - pendant un autre intervalle de temps suivant l'intervalle de temps initial et dans le cas où une mobilité réduite du premier équipement utilisateur (21) est détectée pendant un intervalle de temps prédéterminé - une opération de radiomessagerie subséquente, appliquée lors d'un premier service à destination mobile suivant ciblant le premier équipement utilisateur (21), est exécutée - plutôt que dans la première zone de radiomessagerie (51) - dans une première zone de messagerie modifiée (51'), la première zone de messagerie modifiée (51') comprenant moins de cellules radio de la pluralité de cellules radio (10, 11) par rapport à la première zone de radiomessagerie (51) utilisée pendant l'intervalle de temps initial, dans lequel, en particulier, une information relative à ou concernant la première zone de radiomessagerie modifiée (51') est communiquée au premier équipement utilisateur (21) pendant un intervalle de temps pendant lequel le premier équipement utilisateur (21) est en mode connecté, en particulier en mode connecté pour d'autres raisons que la transmission de l'information concernant la première zone de radiomessagerie modifiée (51').

5. Procédé selon la revendication 4, dans lequel l'information relative à ou concernant la première zone de radiomessagerie ou la première zone de radiomessagerie modifiée
- est stockée dans un référentiel de zone de radiomessagerie (150), le référentiel de zone de radiomessagerie (150) étant accessible au réseau central (120) et/ou au réseau d'accès (110) du réseau de communication mobile (100), et
- est soit communiquée, par le réseau de communication mobile (100), au premier équipement utilisateur (21), soit est accessible, notamment via le référentiel de zone de radiomessagerie (150), au premier équipement utilisateur (21),
dans lequel, en particulier, une information relative à ou concernant la première zone de radiomessagerie ou la première zone de radiomessagerie modifiée est échangée, en particulier directement, entre le premier équipement utilisateur et le référentiel de zone de radiomessagerie.

6. Procédé selon l'une des revendications 4 ou 5, dans lequel la première zone de radiomessagerie modifiée (51') est générée par le premier équipement utilisateur (21), suggérée en particulier par le premier équipement utilisateur (21).

7. Procédé selon l'une des revendications précédentes, dans lequel le réseau de communication mobile (100) comprend un référentiel de zone de radiomessagerie par défaut (160) accessible au réseau central (120) et/ou au réseau d'accès (110) du réseau de communication mobile (100), dans lequel les informations du référentiel de zone de radiomessagerie par défaut (160) sont utilisées pour définir une zone de radiomessagerie par défaut (50) à utiliser en tant que première zone de radiomessagerie (51) attribuée au premier équipement utilisateur (21) lors du rattachement du premier équipement utilisateur (21) au réseau de communication mobile (100) via une cellule radio de la pluralité de cellules radio (10, 11) - en tant que cellule de desserte (10) - auquel le premier équipement utilisateur (21) est rattaché pour la première fois ou pour la première fois après un intervalle de temps d'application par défaut prédéterminé,
dans lequel, de préférence, la zone de radiomessagerie par défaut (50) à utiliser en relation avec une cellule radio de la pluralité de cellules radio (10, 11) est une zone de radiomessagerie par défaut générée automatiquement (50), générée en particulier sur la base de
- une position géographique de la cellule radio par rapport à d'autres cellules radio de la pluralité de cellules radio (10, 11) et/ou
- une position géographique de la cellule radio par rapport à des autoroutes, voies de chemin de fer ou autres objets d'infrastructure et/ou
- une position géographique de la cellule radio par rapport à des zones de chevauchement par rapport à d'autres cellules radio de la pluralité de cellules radio (10, 11).

8. Procédé selon la revendication 3, dans lequel - en fonction du schéma de mobilité du premier équipement utilisateur (21) lié au fait d'être rattaché à la cellule de desserte (10) - une zone de radiomessagerie spécifique est utilisée en tant que première zone de radiomessagerie (51) attribuée au premier équipement utilisateur (21) lors du rattachement du premier équipement utilisateur (21) au réseau de communication mobile (100) via la cellule de desserte (10), la zone de radiomessagerie spécifique étant stockée dans le référentiel de zone de radiomessagerie (150) associé au premier équipement utilisateur (21).

9. Procédé selon la revendication 8, dans lequel la zone de radiomessagerie spécifique est appliquée au premier équipement utilisateur (21) et au second équipement utilisateur (22) - tandis que les premier et second équipements utilisateurs (21, 22) sont rattachés via la cellule de desserte (10) -, dans lequel la zone de radiomessagerie spécifique est désignée au moyen d'une identité de zone de radiomessagerie spécifique.

10. Procédé selon l'une des revendications précédentes, dans lequel la première opération de radiomessagerie et/ou la seconde opération de radiomessagerie comprennent une radiomessagerie au moins partiellement implicite.

11. Réseau de communication mobile (100) pour une gestion de mobilité améliorée et adaptative, dans lequel au moins un premier équipement utilisateur (21) et un second équipement utilisateur (22) sont rattachés au réseau de communication mobile (100),
dans lequel le réseau de communication mobile (100) comprend au moins un réseau central (120) et un réseau d'accès (110), dans lequel le réseau d'accès (110) comprend une pluralité de cellules radio (10, 11), une cellule radio parmi la pluralité de cellules radio (10, 11) étant la cellule de desserte (10) à la fois du premier équipement utilisateur (21) et du second équipement utilisateur (22),
dans lequel le réseau de communication mobile (100) est configuré de telle sorte que - tandis que le premier équipement utilisateur (21) et le second équipement utilisateur (22) sont, respectivement, pendant un intervalle de temps initial, en mode veille -
- lors d'un premier service à destination mobile ciblant le premier équipement utilisateur (21) - une première opération de radiomessagerie est effectuée visant le premier équipement utilisateur (21), et
- lors d'un second service à destination mobile ciblant le second équipement utilisateur (22) - une seconde opération de radiomessagerie est effectuée visant le second équipement utilisateur (22),
dans lequel le réseau de communication mobile (100) est configuré de telle sorte que la première opération de radiomessagerie est effectuée - pendant l'intervalle de temps initial - dans une première zone de radiomessagerie (51), et la seconde opération de radiomessagerie est effectuée - pendant l'intervalle de temps initial - dans une seconde zone de radiomessagerie (52), la première zone de radiomessagerie (51) étant définie comme correspondant à un premier ensemble de cellules radio spécifiques du premier équipement utilisateur (21), et la seconde zone de radiomessagerie (52) étant définie comme correspondant à un second ensemble de cellules radio spécifiques du second équipement utilisateur (22),
et le réseau de communication mobile (100) est configuré pour définir les zones de radiomessagerie attribuées aux premier et second équipements utilisateurs de telle sorte qu'un chevauchement obligatoire entre la première zone de radiomessagerie (51) et la seconde zone de radiomessagerie (52) est limité à la cellule de desserte (10), dans lequel la première zone de radiomessagerie (51) et la seconde zone de radiomessagerie (52) diffèrent l'une de l'autre en fonction des besoins actuels en mobilité et de la vitesse du premier équipement utilisateur (21) et du second équipement utilisateur (22).

12. Système de gestion de mobilité améliorée et adaptative, le système comprenant un réseau de communication mobile (100) et une pluralité d'équipements utilisateurs (21, 22, 23), dans lequel au moins un premier équipement utilisateur (21) et un second équipement utilisateur (22) sont rattachés au réseau de communication mobile (100), dans lequel le réseau de communication mobile (100) comprend au moins un réseau central (120) et un réseau d'accès (110),
dans lequel le réseau d'accès (110) comprend une pluralité de cellules radio (10, 11), une cellule radio parmi la pluralité de cellules radio (10, 11) étant la cellule de desserte (10) à la fois du premier équipement utilisateur (21) et du second équipement utilisateur (22),
dans lequel le système est configuré de telle sorte que - tandis que le premier équipement utilisateur (21) et le second équipement utilisateur (22) sont, respectivement, pendant un intervalle de temps initial, en mode veille -
- lors d'un premier service à destination mobile ciblant le premier équipement utilisateur (21) - une première opération de radiomessagerie est effectuée visant le premier équipement utilisateur (21), et
- lors d'un second service à destination mobile ciblant le second équipement utilisateur (22) - une seconde opération de radiomessagerie est effectuée visant le second équipement utilisateur (22),
dans lequel le système est configuré de telle sorte que la première opération de radiomessagerie est effectuée - pendant l'intervalle de temps initial - dans une première zone de radiomessagerie (51), et la seconde opération de radiomessagerie est effectuée - pendant l'intervalle de temps initial - dans une seconde zone de radiomessagerie (52), la première zone de radiomessagerie (51) étant définie comme correspondant à un premier ensemble de cellules radio spécifiques du premier équipement utilisateur (21), et la seconde zone de radiomessagerie (52) étant définie comme correspondant à un second ensemble de cellules radio spécifiques du second équipement utilisateur (22),
et le réseau de communication mobile (100) est configuré pour définir les zones de radiomessagerie attribuées aux premier et second équipements utilisateurs de telle sorte qu'un chevauchement obligatoire entre la première zone de radiomessagerie (51) et la seconde zone de radiomessagerie (52) est limité à la cellule de desserte (10), dans lequel - dans le cas où la première zone de radiomessagerie (51) correspond au premier ensemble de cellules radio et/ou la seconde zone de radiomessagerie (52) correspond au second ensemble de cellules radio - la première zone de radiomessagerie (51) et la seconde zone de radiomessagerie (52) diffèrent l'une de l'autre en fonction des besoins actuels en mobilité et de la vitesse du premier équipement utilisateur (21) et du second équipement utilisateur (22).

13. Programme comprenant un code de programme lisible par ordinateur qui, lorsqu'il est exécuté sur un ordinateur, amène l'ordinateur à exécuter un procédé selon l'une des revendications 1 à 9.

14. Produit programme informatique pour une gestion de mobilité améliorée et adaptative dans un réseau de communication mobile (100), le produit programme informatique comprenant un programme informatique stocké sur un support de stockage, le programme informatique comprenant un code de programme qui, lorsqu'il est exécuté sur un ordinateur, amène l'ordinateur à exécuter un procédé selon l'une des revendications 1 à 9.
